# EUROPÄISCHE PATENTANMELDUNG

(11) **EP 4 328 773 A1**
(43) Veröffentlichungstag der Anmeldung: **28.02.2024**
(21) Anmeldenummer: 22192181.0
(22) Anmeldetag: 25.08.2022
(51) Int. Cl.: G06F 21/55, H04L 9/40

(54) **VERFAHREN ZUR GEFÄHRDUNGSANALYSE EINES RECHNERSYSTEMS**

(71) Anmelder: DGC Switzerland AG, 8002 Zürich (CH)
(72) Erfinder: Nehls, Matthias, 8002 Zürich (CH)
(74) Vertreter: Reich, Jochen

(57) **Zusammenfassung**

Die vorliegende Erfindung ist auf ein Verfahren gerichtet, welches ausgehend von bestehenden Beschreibungen von Sicherheitslücken eine Gefährdungslage für weitere Rechnersysteme berechnet und sodann die Rechnersysteme proaktiv, das heißt also bereits vor einem Angriff, absichert. Die Erfindung betrifft ferner eine Systemanordnung, welche entsprechend eingerichtet ist, sowie Steuerbefehle, welche das Verfahren ausführen bzw. die Systemanordnung betreiben. Ferner wird ein computerlesbares Medium mit den Steuerbefehlen vorgeschlagen.

## Beschreibung

Die vorliegende Erfindung ist auf ein Verfahren gerichtet, welches ausgehend von bestehenden Beschreibungen von Sicherheitslücken eine Gefährdungslage für weitere Rechnersysteme berechnet und sodann die Rechnersysteme proaktiv, das heißt also bereits vor einem Angriff, absichert. Die Erfindung betrifft ferner eine Systemanordnung, welche entsprechend eingerichtet ist, sowie Steuerbefehle, welche das Verfahren ausführen bzw. die Systemanordnung betreiben. Ferner wird ein computerlesbares Medium mit den Steuerbefehlen vorgeschlagen.

Aus dem Stand der Technik sind Beschreibungen von Sicherheitslücken bekannt, welche allgemein eine Schwachstelle in einem Computersystem beschreiben. Hierzu sind bereits Datenbanken vorhanden, welche eine Schwachstelle beschreiben und hierzu eine umfangreiche textuelle Spezifikation der Schwachstelle mitsamt einer Punktebewertung der Gefährlichkeit vorhalten.

Solche Datenbanken werden typischerweise manuell erstellt und beziehen sich auf bereits durchgeführte Angriffe, welche Schwachstellen betreffen, die sodann bekannt werden. Der Stand der Technik schlägt hierzu unterschiedliche Metriken vor, die es erlauben einen entsprechenden Punktewert zu vergeben, der die Verletzlichkeit eines Systems beschreibt bzw. die Schwere der Störung numerisch bewertet.

Aus dem Stand der Technik sind unterschiedliche Angriffe auf Computersysteme bekannt. Hierbei versuchen unberechtigte Zugriff auf ein Computersystem derart zu erlangen, dass diese entweder unberechtigt Daten auslesen oder aber auch unberechtigte Daten in das Computersystem einschreiben. Darüber hinaus gibt es Angriffe, welche Systemparameter stören wie zum Beispiel die Antwortzeiten. So ist es aus dem Stand der Technik bekannt, einen sogenannten Denial of Service DOS-Angriff zu starten. Hierbei starten unterschiedliche Akteure diverse Anfragen deren Anzahl derart hoch ist, dass das angegriffene Computersystem die Anfragen nicht mehr bewältigen kann. Hierunter leiden auch gutwillige Benutzer, die ebenso nicht mehr bedient werden können.

Ein Nachteil aus dem Stand der Technik ist es, dass herkömmliche Computersysteme erst dann reagieren, wenn der Angriff bereits stattgefunden hat. Erkennt das angegriffene System einen Angriff, so ist typischerweise der unerwünschte Effekt bereits eingetroffen und es kann lediglich im Nachhinein reagiert werden. Auch gutwillige Benutzer haben dann typischerweise den Eingriff zu spüren bekommen und leiden unter der deutlich gesenkten Systemperformanz.

Ein Nachteil im Stand der Technik ist es, dass die Metriken zur Bewertung der Schwachstelle oftmals nicht nachvollziehbar sind. Diese Metriken sind oftmals mehrstufig, sodass Diskussionsbedarf besteht, wie nunmehr welcher Teilwert zu gewichten ist bzw. generell wie dieser zu berechnen ist.

Darüber hinaus besteht im Stand der Technik der Nachteil, dass solche Bewertungen teilweise sehr subjektiv sind, da diese auf manuellen Benutzereingaben beruhen. So wird typischerweise einem Benutzer in einem mehrstufigen Fragenkatalog eine vorbestimmte Anzahl an vorbestimmten Fragen präsentiert, aus denen er vorbestimmte Antworten auswählen kann. Somit ist die Ausdrucksmöglichkeit des Befragten stark eingegrenzt und letztendlich resultiert ein teilweise subjektiver Gefährdungswert.

Es besteht also ein Bedarf im Stand der Technik ein automatisiertes Verfahren zu schaffen, welches eine aktuelle Gefährdungslage numerisch bewertet und hierzu dynamisch zur Laufzeit auf aktuelle Gefahrenpotenziale eingeht. Der Einfluss des menschlichen Benutzers soll derart eliminiert werden, dass eine objektive Bewertung und sodann Reaktion möglich ist.

Darüber hinaus besteht im Stand der Technik der Bedarf ein automatisiertes Verfahren zu schaffen, welches nicht nur die Fehleranfälligkeit durch subjektive menschliche Eingaben eliminiert, sondern ebenso auch mit geringem technischem Aufwand durchführbar ist. Darüber hinaus besteht im Stand der Technik ein Bedarf bestehende Bewertungsmetriken nachzubessern und bereits vorhandene Bewertungen zu überprüfen und gegebenenfalls nachzujustieren.

Es ist somit eine Aufgabe der vorliegenden Erfindung ein Verfahren vorzuschlagen, welches automatisiert eine Gefährdungsanalyse eines Rechnersystems zur Laufzeit durchführen kann und sodann das betroffene System auch entsprechend schützen kann. Darüber hinaus ist es eine Aufgabe der vorgeschlagenen Erfindung eine entsprechend eingerichtete Systemanordnung vorzuschlagen sowie Steuerbefehle, welche das Verfahren ausführen bzw. die Systemanordnung betreiben. Darüber hinaus ist es eine Aufgabe der vorliegenden Erfindung ein computerlesbares Medium mit den Steuerbefehlen vorzuschlagen.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur Gefährdungsanalyse eines Rechnersystems vorgeschlagen, aufweisend ein Auslesen mindestens einer abgespeicherten ersten textuellen Beschreibung einer Sicherheitslücke und eines jeweiligen ersten nummerischen Gefährdungswerts; ein Auslesen einer zweiten Beschreibung einer weiteren Sicherheitslücke und ein Berechnen einer Ähnlichkeit der ersten Beschreibung und der zweiten Beschreibung; ein Errechnen eines zweiten Gefährdungswerts des Rechnersystems mittels einer Gewichtung des ersten Gefährdungswerts anhand der berechneten Ähnlichkeit; und ein Konfigurieren einer Sicherheitsstufe in dem Rechnersystem in Abhängigkeit des errechneten zweiten Gefährdungswerts.

Die Gefährdungsanalyse eines Rechnersystems erfolgt derart, dass bereits vorhandene Beschreibungen ausgewertet werden und sodann wird bei einem Vorliegen einer neuen Beschreibung automatisiert ein Sicherheitswert bzw. ein numerisches Gefährdungspotenzial berechnet. Bei einem Rechnersystem kann es sich um einen einzelnen Computer handeln oder aber auch einen Verbund von Computern, welche netzwerktechnisch verbunden sind. Darüber hinaus kann als ein Rechnersystem eine Vielzahl von Rechnerkomponenten verstanden werden, welche gemeinsam eine bestimmte Funktionalität bereitstellen.

In einem vorbereitenden Verfahrensschritt erfolgt ein Auslesen einer abgespeicherten ersten textuellen Beschreibung einer Sicherheitslücke und eines jeweiligen ersten numerischen Gefährdungswerts. Es werden also bestehende Datenbanken angefragt und hieraus werden textuelle Beschreibungen bzw. mindestens eine textuelle Beschreibung ausgelesen, die sich auf eine Sicherheitslücke bezieht.

Als eine Sicherheitslücke kann generell eine Beeinträchtigung in einem Zielsystem bzw. generell einem Rechnersystem verstanden werden. Hierzu muss nicht nur die Sicherheit an sich gefährdet sein, sondern vielmehr kann auch die Qualität eines Dienstes nachteilig beeinflusst werden. So kann eine Sicherheitslücke allgemein als eine Schwachstelle bezeichnet werden. Beispielsweise führt eine Denial of Service Attacke zu einer reduzierten Antwortzeit bzw. Bandbreite, was insofern sicherheitskritisch ist, als dass vorgegebene Qualitätsparameter nicht mehr erfüllt werden können. Auch eine Anfälligkeit für einen solchen Eingriff kann als Sicherheitslücke verstanden werden, da das angegriffene Zielsystem letztendlich nicht mehr in der Lage sein kann die geforderte Funktionalität aufgrund der Serverüberlastung bereitzustellen.

Der ausgelesene erste numerische Gefährdungswert beschreibt wie stark ein System bezüglich der erkannten Sicherheitslücke anfällig ist bzw. wie hoch das Risiko einer Systembeeinträchtigung ist. Somit kann dieser Wert als eine Verletzlichkeit bezeichnet werden. Typischerweise ist bei einem höheren Gefährdungswert von einer höheren Verletzungswahrscheinlichkeit auszugehen. Eine Verletzungswahrscheinlichkeit kann auch als Gefährdungspotenzial oder generell Gefährlichkeit bezeichnet werden.

Ferner erfolgt ein Auslesen einer zweiten Beschreibung einer weiteren Sicherheitslücke und ein Berechnen einer Ähnlichkeit der ersten Beschreibung und der zweiten Beschreibung. Es wird also eine zweite Beschreibung bereitgestellt, welche ebenfalls eine Sicherheitslücke bzw. Schwachstelle beschreibt, wobei dieser Schwachstelle noch kein numerischer Gefährdungswert zugeordnet ist. Es liegt also lediglich eine textuelle zweite Beschreibung vor, ohne dass hierbei bereits bekannt ist, ob die Beschreibung der Sicherheitslücke tatsächlich darauf schließen lässt, ob ein signifikantes Gefährdungspotenzial vorliegt.

Um zu identifizieren, ob die Sicherheitslücke bereits bekannt ist bzw. inwiefern sich die zweite Beschreibung der Sicherheitslücke der ersten Beschreibung ähnelt, wird eine Ähnlichkeit berechnet. Generell ist es möglich, dass mehrere erste Beschreibungen vorliegen und somit mehrere erste numerische Gefährdungswerte. Die zweite Beschreibung wird sodann in Bezug zu den ersten Beschreibungen gesetzt und es wird herausgefunden, wie ähnlich die zweite Beschreibung zu mindestens einer ersten Beschreibung ist. Ist die zweite Beschreibung in der Datenbank der ersten Beschreibungen bereits abgespeichert, so kann beispielsweise der numerische Wert der Ähnlichkeit 1 resultieren, also die komplette Ähnlichkeit.

Die Ähnlichkeit kann generell ebenfalls als ein numerischer Wert definiert werden, wobei beispielsweise der Wert 0,8 davon ausgeht, dass zwei Beschreibungen sehr ähnlich sind, sich aber dennoch unterscheiden. Bei einem Wert von beispielsweise 0,5 kann man davon ausgehen, dass signifikante Änderungen bzw. eine geringere Ähnlichkeit vorliegt. Der maximale Wert der Gleichheit wird bei 1 erreicht. Darüber hinaus kann man die Ähnlichkeit auch derart berechnen, dass man bestimmte Schlüsselwörter stärker gewichtet und falls in der zweiten Beschreibung diese Schlüsselwörter häufiger vorkommen als in der ersten Beschreibung kann auch ein Wert von größer 1, beispielsweise 1,2 vorliegen. Wird der Angriff einer Datenmanipulation höher gewertet und geht die zweite Beschreibung öfter auf diese Sicherheitslücke ein als die erste Beschreibung, so kann auch ein Wert von größer 1 resultieren.

Das Berechnen der Ähnlichkeit kann mittels einer Textverarbeitung bzw. Sprachverarbeitung derart erfolgen, dass eine natürliche Sprache analysiert wird. Hierzu kennt der Fachmann diverse Techniken, welche eine statistische Auswertung der Ähnlichkeit erlauben. Darüber hinaus können die Texte derart normalisiert werden, dass es keinen Unterschied macht, ob nunmehr die Beschreibung dem Umfang nach lang oder kurz ist. Ferner können auch unterschiedliche Kommunikationskanäle berücksichtigt werden, sodass in einem vorbereitenden Verfahrensschritt die Datenformate derart angepasst werden, dass die Inhalte der Beschreibungen miteinander vergleichbar sind.

Da nunmehr die Ähnlichkeit zwischen der ersten Beschreibung und der zweiten Beschreibung berechnet wurde, ist es nunmehr möglich anhand dieser Ähnlichkeit auch die Gefährdungswerte zu gewichten. Hiermit wird die errechnete Ähnlichkeit derart verwendet, dass aufgrund der Ähnlichkeit der Beschreibungen auch davon ausgegangen wird, dass ein Gefährdungswert mit gleicher Ähnlichkeit vorliegen muss. Da der Gefährdungswert der zweiten Beschreibung noch nicht vorliegt, kann dieser somit derart berechnet werden, dass der erste Gefährdungswert mit der bestimmten Ähnlichkeit gewichtet wird. Ein Gewichten heißt hierbei ein Multiplizieren beziehungsweise Dividieren. Bevorzugt wird ein Multiplizieren durchgeführt. Auf diese Art und Weise wird der zweite Gefährdungswert berechnet, ohne dass hierbei ein menschliches Zutun notwendig wird und es können eine Vielzahl von ersten Gefährdungswerten berücksichtigt werden.

So wird das Berechnen der Ähnlichkeit der zweiten Beschreibung derart iterativ durchgeführt, dass diverse erste Beschreibungen und erste numerische Gefährdungswerte vorliegen und sodann kann berechnet werden, wie ähnlich die zweite Beschreibung zu jeder der ersten Beschreibungen ist und dementsprechend können auch alle numerischen Gefährdungswerte der ersten textuellen Beschreibung derart gewichtet werden, dass ein zweiter Gefährdungswert herauskommt. Da in diesem Verfahren mehrere zweite Gefährdungswerte resultieren, kann hierbei ein Mittel gebildet werden, derart, dass wiederum ein einziger zweiter Gefährdungswert entsteht.

In einem Beispiel liegt eine Tabelle vor, welche in einer ersten Spalte erste Beschreibungen einer Sicherheitslücke vorhält und in einer zweiten Spalte entsprechende numerische Gefährdungswerte vorhält. Die erste Spalte enthält also die textuellen Beschreibungen in zehn Zeilen, was also zehn Sicherheitslücken betrifft. Die zweite Spalte weist der ersten Spalte jeweils einen numerischen Gefährdungswert zu und hierzu liegen ebenfalls zehn Zeilen vor, die jeder Sicherheitslücke ein Gefährdungspotenzial zuweisen.

Diese erste Tabelle wird also in einem ersten Verfahrensschritt ausgelesen und sodann möchte ein Benutzer für eine eingetretene Sicherheitslücke, also einen erfolgreichen Angriff einen Gefährdungswert berechnen. Dies kann auch rein hypothetisch derart erfolgen, dass er eine mögliche Beschreibung, also die zweite Beschreibung, manuell eingibt und erfahren möchte, ob ein solcher Angriff gefährlich ist.

Im vorliegenden Beispiel liegt also nicht nur eine erste Beschreibung und ein erster numerischer Gefährdungswert vor, sondern es liegen zehn erste Beschreibungen und zehn erste Gefährdungswerte vor. Ziel ist es nunmehr ausgehend von der eingegebenen zweiten Beschreibung den zweiten Gefährdungswert zu errechnen. Dies kann derart erfolgen, dass nicht nur eine erste Beschreibung und der erste Gefährdungswert berücksichtigt werden, sondern iterativ werden alle Ähnlichkeiten von dem zweiten Text bzw. der zweiten Beschreibung zu den ersten zehn Beschreibungen berechnet.

Es werden also die Textkorpora jeweils verglichen und es entstehen zehn numerische Werte, die im vorliegenden Beispiel zwischen 0,5 und 1 liegen können. Nunmehr erfolgt eine Gewichtung der jeweiligen ersten Gefährdungswerte mit den berechneten Ähnlichkeiten. Somit wird erkannt, inwieweit die zweite Beschreibung den jeweils ersten Beschreibungen gleicht. Nunmehr wird aus den zehn zweiten Gefährdungswerten ein einzelner Entgefährdungswert gebildet. Hierzu kann numerisch die Mitte gebildet werden beziehungsweise je nach Metrik können die einzelnen Werte gewichtet aufsummiert werden. Nach der gewichteten Aufsummierung kann ein Mittelwert, also geteilt durch 10, gebildet werden. Ganz allgemein kann davon ausgegangen werden, dass den zweiten Gefährdungswerten, welche lediglich als Teilwerte vorliegen, eine Funktion derart zugewiesen wird, dass diese zehn Teilwerte zu einem Endwert zusammengefasst werden.

Da nunmehr der zweite Gefährdungswert bekannt ist, wird eine entsprechende Sicherheitsstufe in dem Rechnersystem eingestellt derart, dass die Gefährdungsanalyse, also der zweite Gefährdungswert, berücksichtigt wird.

Hierzu kann der Sicherheitsstufe eine bestimmte Anzahl von Steuerbefehlen zugeordnet werden. Ist beispielsweise die Gefährdungsstufe besonders hoch, also der Gefährdungswert maximal, so kann die Sicherheitsstufe vorsehen, dass das System insgesamt abzuschalten ist. Liegt eine geringere Gefährdungsstufe vor, so ist es beispielsweise möglich lediglich einzelne Ports zu sperren bzw. bei einer geringeren Gefahrenstufe bzw. Sicherheitsstufe ist lediglich ein Update einzuspielen.

Zur Erstellung der zweiten Beschreibung der Sicherheitslücke ist es auch möglich ein Systemprotokoll auszulesen, welches einen bereits durchgeführten Angriff mit protokolliert hat. Auf diese Art und Weise kann die zweite Beschreibung automatisiert anhand einer Protokolldatei erstellt werden.

Gemäß einem Aspekt der vorliegenden Erfindung erfolgt das Errechnen des zweiten Gefährdungswertes derart, dass zusätzlich eine Gewichtung mit einem vorab berechneten dritten Gefährdungswert erfolgt. Dies hat den Vorteil, dass bei einem Vorliegen eines Gefährdungswerts bezüglich der zweiten Beschreibung dieser dritte Gefährdungswert anhand des zweiten berechneten Gefährdungswertes justiert werden kann. Beispielsweise wurde vorbereitend der zweiten Beschreibung schon ein Gefährdungswert zugeordnet. Dieser Gefährdungswert kann nunmehr nach oben verschoben werden, falls der zweite Gefährdungswert höher liegt bzw. nach unten verschoben, falls der zweite berechnete Gefährdungswert niedriger liegt. Auf diese Art und Weise ist ein Nachjustieren von bereits vorhandenen Gefährdungswerten möglich.

Gemäß einem weiteren Aspekt der vorliegenden Erfindung erfolgt die Gewichtung derart, dass der erste Gefährdungswert mit der Ähnlichkeit multipliziert oder dividiert wird. Dies hat den Vorteil, dass bestimmt werden kann, ob der Gefährdungswert erhöht werden soll oder aber verringert werden soll. So können Kriterien definiert werden, dass bei einem Vorhandensein bestimmter Schlüsselwörter über einem vorbestimmten Maß der Gefährdungswert erhöht werden soll.

Gemäß einem weiteren Aspekt vorliegenden Erfindung erhöht die Gewichtung den ersten Gefährdungswert, falls die zweite Beschreibung bestimmter Schlüsselwörter häufiger aufweist als die erste Beschreibung. Dies hat den Vorteil, dass besonders sicherheitskritische Angriffe definiert werden können und bei einem Vorhandensein dieser Schlüsselwörter wird der Gefährdungswert erhöht.

Gemäß einem weiteren Aspekt der vorliegenden Erfindung verringert die Gewichtung den ersten Gefährdungswert, falls die zweite Beschreibung bestimmte Schlüsselwörter seltener aufweist als die erste Beschreibung. Dies hat den Vorteil, dass ein Gefährdungswert herabgesetzt wird, falls Angriffe, welche besonders kritisch sind weniger häufig in der Beschreibung vorkommen. Somit kann also auch die Gewichtung derart beeinflusst werden, dass unterschiedlichen Angriffen eine unterschiedliche Gefährlichkeit zugesprochen wird.

Gemäß einem weiteren Aspekt der vorliegenden Erfindung sind die Schlüsselwörter vorbestimmt und/ oder relativ bezüglich des Umfangs der jeweiligen Beschreibung auftretend. Dies hat den Vorteil, dass manuell Schlüsselwörter eingegeben werden, die besonders gewichtet werden oder aber es wird anhand der Textkorpora statistisch festgestellt, welche Angriffe besonders signifikant sind.

Gemäß einem weiteren Aspekt vorliegenden Erfindung weisen die jeweiligen Beschreibungen Vektoren auf und/ oder werden in Vektoren überführt. Dies hat den Vorteil, dass die signifikanten Wörter bezüglich ihrer Anzahl in Vektoren beschrieben werden können. So kann jede Stelle in einem Vektor für ein bestimmtes Schlüsselwort stehen und der Vektor beschreibt sodann die Anzahl der Vorkommnisse dieses Schlüsselworts in der Beschreibung.

Gemäß einem weiteren Aspekt der vorliegenden Erfindung wird die Ähnlichkeit anhand der Vektoren berechnet. Dies hat den Vorteil, dass die Beschreibungen effektiv anhand der Vektoren verglichen werden können. Hierzu kennt der Fachmann bereits Implementierungen, die so einen Vergleich zwischen Vektoren vornehmen. Dies kann zu dem recheneffizient und speichereffizient durchgeführt werden.

Gemäß einem weiteren Aspekt der vorliegenden Erfindung werden die Beschreibungen kategorisiert und den Kategorien werden Werte zugeordnet, welche in der Gewichtung berücksichtigt werden. Dies hat den Vorteil, dass eine Kategorie geschaffen werden kann, die sinnbildlich für einen bestimmten Angriff steht. Beispielsweise kann festgestellt werden, dass der Begriff Datenmanipulation besonders häufig in einer Beschreibung vorkommt. Sodann kann diese Kategorie von Angriffen Datenmanipulation genannt werden und hierzu kann berücksichtigt werden, dass dies ein besonders gefährlicher Angriff ist. Werden nunmehr weitere Beschreibungen identifiziert, die ähnlich zu kategorisieren sind, so wird die Gewichtung entsprechend angehoben.

Gemäß einem weiteren Aspekt der vorliegenden Erfindung wird jedem Gefährdungswert eine Sicherheitsstufe zugewiesen, welche vorbestimmte Sicherheitsbefehle beschreibt. Dies hat den Vorteil, dass zu jedem Zeitpunkt klar ist, welche Sicherheitsstufe vorherrschen muss und es werden Befehle bereitgestellt, die dieser Sicherheitsstufe entsprechen. So kann eine besonders hohe Sicherheitsstufe beispielsweise dazu führen, dass das System insgesamt abgeschaltet wird. Es werden typischerweise jeder Sicherheitsstufe mehrere Sicherheitsbefehle zugeordnet, derart, dass der Bedrohungsstufe Rechnung getragen wird.

Gemäß einem weiteren Aspekt der vorliegenden Erfindung umfasst das Konfigurieren der Sicherheitsstufe ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen. Dies hat den Vorteil, dass unterschiedliche Aktionen vorgestellt werden, welche der jeweiligen Sicherheitsstufe entsprechen. So kann eine Sicherheitsstufe mehrere oder einen einzelnen Befehl aus den angeführten Beispielen umsetzen.

Gemäß einem weiteren Aspekt der vorliegenden Erfindung umfasst das Berechnen einer Ähnlichkeit ein statistisches Verfahren, eine Wortstammreduktion, ein Löschen von Stoppwörtern, eine linguistische Datenverarbeitung, eine Spracherkennung, eine syntaktische Analyse, eine semantische Analyse, ein Betreiben eines neuronalen Netzwerks und/ oder eine Textverarbeitung. Dies hat den Vorteil, dass Verfahren angewendet werden können, die die jeweiligen Beschreibungen inhaltlich aufarbeiten und sodann vergleichbar machen. Anhand der überarbeiteten Texte können sodann Ähnlichkeiten berechnet werden. Dies ermöglicht es eine genauere Ähnlichkeit zwischen den Texten zu berechnen, da die einzelnen Beschreibungen semantisch aufgearbeitet werden.

Die Aufgabe wird auch gelöst durch eine Systemanordnung zur Gefährdungsanalyse eines Rechnersystems, aufweisend eine erste Schnittstelleneinheit eingerichtet zum Auslesen mindestens einer abgespeicherten ersten textuellen Beschreibung einer Sicherheitslücke und eines jeweiligen ersten nummerischen Gefährdungswerts; eine zweite Schnittstelleneinheit eingerichtet zum Auslesen einer zweiten Beschreibung einer weiteren Sicherheitslücke und einer Einheit eingerichtet zum Berechnen einer Ähnlichkeit der ersten Beschreibung und der zweiten Beschreibung; eine Recheneinheit eingerichtet zum Errechnen eines zweiten Gefährdungswerts des Rechnersystems mittels einer Gewichtung des ersten Gefährdungswerts anhand der berechneten Ähnlichkeit; und eine Konfigurationseinheit eingerichtet zum Konfigurieren einer Sicherheitsstufe in dem Rechnersystem in Abhängigkeit des errechneten zweiten Gefährdungswerts.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung; und
- Figur 2:: ein schematisches Diagramm, welches eine Justierung von Gefährdungswerten gemäß einem Aspekt der vorliegenden Erfindung vorschlägt.

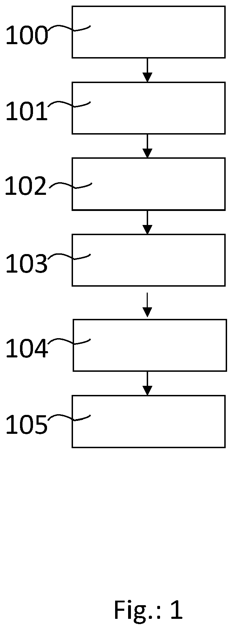

Figur 1 zeigt ein schematisches Ablaufdiagram zum Verfahren zur Gefährdungsanalyse eines Rechnersystems, aufweisend ein Auslesen 100 mindestens einer abgespeicherten ersten textuellen Beschreibung einer Sicherheitslücke und eines jeweiligen ersten nummerischen Gefährdungswerts; ein Auslesen 101 einer zweiten Beschreibung einer weiteren Sicherheitslücke und ein Berechnen 102 einer Ähnlichkeit der ersten Beschreibung und der zweiten Beschreibung; ein Errechnen 103 eines zweiten Gefährdungswerts des Rechnersystems mittels einer Gewichtung 104 des ersten Gefährdungswerts anhand der berechneten Ähnlichkeit; und ein Konfigurieren 105 einer Sicherheitsstufe in dem Rechnersystem in Abhängigkeit des errechneten zweiten Gefährdungswerts.

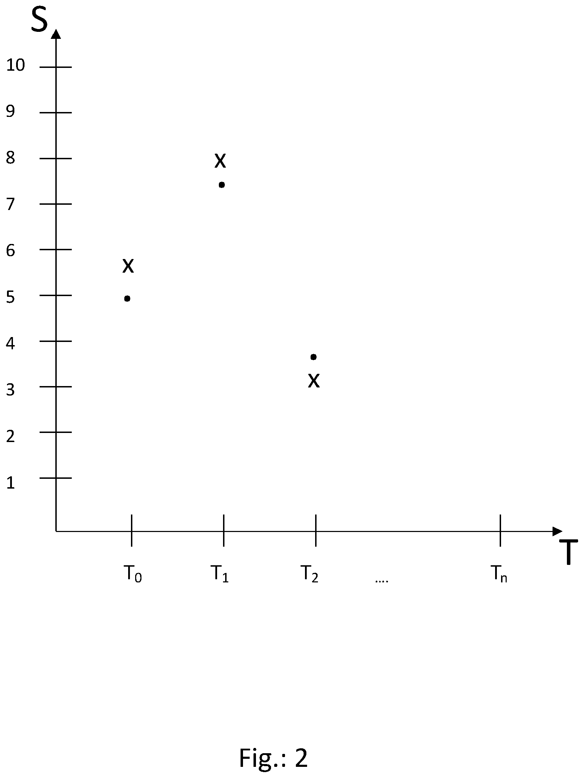

Figur 2 zeigt ein Diagramm, wobei auf der x-Achse unterschiedliche Texte dargestellt sind, die jeweils einer Beschreibung entsprechen. Diesen Texten ist jeweils ein Gefährdungswert zugeordnet, der auch als Score bezeichnet wird, der an der y-Achse angetragen ist. Bei den Beschreibungen an der x-Achse handelt es sich um erste Beschreibungen, denen ein erster Gefährdungswert jeweils zugeordnet ist.

Wird nur die zweite Beschreibung bereitgestellt, so wird diese mit den jeweiligen Texten, also den ersten Beschreibungen, verglichen und es stellt sich eine Ähnlichkeit ein. Betrachtet man beispielsweise den ersten Text T0, so erkennt man, dass die Ähnlichkeit zwischen den beiden Texten beispielsweise 0,9 betragen kann. Dass in dem Diagramm dargestellte X spiegelt den jeweiligen Gefährdungswert der ersten Beschreibungen wieder und der Punkt spiegelt die Gefährdung bzw. den Gefährdungswert durch die zweite Beschreibung wieder. Wird nunmehr erkannt, dass die zweite Beschreibung 0,9 bezüglich der ersten Beschreibung T0 ist, so wird auf den Wert im vorliegenden Diagramm oben diese Ähnlichkeit aufgewichtet und es entsteht der Punkt, der folglich einen niedrigeren Wert aufweist.

In dem vorliegenden Beispiel wurden Schlüsselwörter besonders stark gewichtet und beispielsweise bei T2 liegt eine Ähnlichkeit von 1,3 vor, da in dem zweiten Text beziehungsweise der zweiten Beschreibung Schlüsselwörter signifikant häufiger vorkommen. Somit war die Gewichtung X des Texts T2 nach oben mit der errechneten Ähnlichkeit zu gewichten und es resultiert der frühere Punkt mit also einem höheren Gefährdungswert.

Die Texte an der x-Achse können auch eine zeitliche Entwicklung darstellen, sodass eine Veränderung von Texten dargestellt werden kann und sodann können auch zukünftige Entwicklungen extrapoliert werden.

Wird also nicht nur eine erste Beschreibung berücksichtigt, sondern wie im vorliegenden Beispiel Beschreibungen so kann aus den unterschiedlichen Punkten ein Mittelwert gebildet werden und dieser Mittelwert entspricht der durchschnittlichen Gefährdung, also des durchschnittlichen Gefährdungswerts.

Diese Art und Weise ist es möglich ausgehend von bestehenden ersten Gefährdungswerten einen gemittelten zweiten Gefährdungswert zu errechnen. Somit ist das Bedrohungspotenzial erkannt und entsprechendes Computersystem kann entsprechend dieser Gefährdung abgesichert werden.

## Patentansprüche

1. Verfahren zur Gefährdungsanalyse eines Rechnersystems, aufweisend:
- ein Auslesen (100) mindestens einer abgespeicherten ersten textuellen Beschreibung einer Sicherheitslücke und eines jeweiligen ersten nummerischen Gefährdungswerts;
- ein Auslesen (101) einer zweiten Beschreibung einer weiteren Sicherheitslücke und ein Berechnen (102) einer Ähnlichkeit der ersten Beschreibung und der zweiten Beschreibung;
- ein Errechnen (103) eines zweiten Gefährdungswerts des Rechnersystems mittels einer Gewichtung (104) des ersten Gefährdungswerts anhand der berechneten Ähnlichkeit; und
- ein Konfigurieren (105) einer Sicherheitsstufe in dem Rechnersystem in Abhängigkeit des errechneten zweiten Gefährdungswerts.

2. Verfahren nach Anspruch 1, **dadurch gekennzeichnet, dass** das Errechnen (103) des zweiten Gefährdungswerts derart erfolgt, dass zusätzlich eine Gewichtung mit einem vorab berechneten dritten Gefährdungswert erfolgt.

3. Verfahren nach Anspruch 1 oder 2, **dadurch gekennzeichnet, dass** die Gewichtung (104) derart erfolgt, dass erste Gefährdungswert mit der Ähnlichkeit multipliziert oder dividiert wird.

4. Verfahren nach einem der vorhergehenden Ansprüche, **dadurch gekennzeichnet, dass** die Gewichtung (104) den ersten Gefährdungswert erhöht, falls die zweite Beschreibung bestimmte Schlüsselwörter häufiger aufweist als die erste Beschreibung.

5. Verfahren nach einem der vorhergehenden Ansprüche, **dadurch gekennzeichnet, dass** die Gewichtung (104) den ersten Gefährdungswert verringert, falls die zweite Beschreibung bestimmte Schlüsselwörter seltener aufweist als die erste Beschreibung.

6. Verfahren nach einem der Ansprüche 4 oder 5, **dadurch gekennzeichnet, dass** die Schlüsselwörter vorbestimmt sind und/ oder relativ bezüglich des Umfangs der jeweiligen Beschreibung auftreten.

7. Verfahren nach einem der vorhergehenden Ansprüche, **dadurch gekennzeichnet, dass** die jeweiligen Beschreibungen Vektoren aufweisen und/ oder in Vektoren überführt werden.

8. Verfahren nach Anspruch 7, **dadurch gekennzeichnet, dass** die Ähnlichkeit anhand der Vektoren berechnet wird.

9. Verfahren nach einem der vorhergehenden Ansprüche, **dadurch gekennzeichnet, dass** die Beschreibungen kategorisiert werden und den Kategorien Werte zugeordnet sind, welche in der Gewichtung berücksichtigt werden.

10. Verfahren nach einem der vorhergehenden Ansprüche, **dadurch gekennzeichnet, dass** jedem Gefährdungswert eine Sicherheitsstufe zugewiesen wird, welche vorbestimmte Sicherheitsbefehle beschreibt.

11. Verfahren nach einem der vorhergehenden Ansprüche, **dadurch gekennzeichnet, dass** das Konfigurieren (105) der Sicherheitsstufe ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen umfasst.

12. Verfahren nach einem der vorhergehenden Ansprüche, **dadurch gekennzeichnet, dass** Berechnen (102) einer Ähnlichkeit ein statistisches Verfahren, eine Wortstammreduktion, ein Löschen von Stoppwörtern, eine linguistische Datenverarbeitung, eine Spracherkennung, eine syntaktische Analyse, eine semantische Analyse, ein Betreiben eines neuronalen Netzwerks und/ oder eine Textverarbeitung umfasst.

13. Systemanordnung zur Gefährdungsanalyse eines Rechnersystems, aufweisend:
- eine erste Schnittstelleneinheit eingerichtet zum Auslesen (100) mindestens einer abgespeicherten ersten textuellen Beschreibung einer Sicherheitslücke und eines jeweiligen ersten nummerischen Gefährdungswerts;
- eine zweite Schnittstelleneinheit eingerichtet zum Auslesen (101) einer zweiten Beschreibung einer weiteren Sicherheitslücke und einer Einheit eingerichtet zum Berechnen (102) einer Ähnlichkeit der ersten Beschreibung und der zweiten Beschreibung;
- eine Recheneinheit eingerichtet zum Errechnen (103) eines zweiten Gefährdungswerts des Rechnersystems mittels einer Gewichtung (104) des ersten Gefährdungswerts anhand der berechneten Ähnlichkeit; und
- eine Konfigurationseinheit eingerichtet zum Konfigurieren (105) einer Sicherheitsstufe in dem Rechnersystem in Abhängigkeit des errechneten zweiten Gefährdungswerts.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
